# EUROPEAN PATENT APPLICATION

(11) **EP 3 579 634 A1**
(43) Date of publication of application: **11.12.2019**
(21) Application number: 18747518.1
(22) Date of filing: 01.02.2018
(51) Int. Cl.: H04W 72/04

(54) **USER DEVICE AND BASE STATION**

(30) Priority: 03.02.2017 JP 2017019138
(71) Applicant: NTT DOCOMO, INC., Chiyoda-ku Tokyo 100-6150 (JP)
(72) Inventor: SANO, Yousuke, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2018/003398
(87) International publication number: WO 2018/143338

(57) **Abstract**

A user apparatus configured to perform communication with a base station in a radio communication system, including: a storage unit configured to store configuration information on an aggregated uplink control channel in which a plurality of uplink control channels in a plurality of slots are aggregated; and a transmission unit configured to transmit uplink control information, to the base station, using the aggregated uplink control channel based on the configuration information.

## Description

### TECHNICAL FIELD

The present invention relates to a user apparatus and a base station in a radio communication system.

### BACKGROUND ART

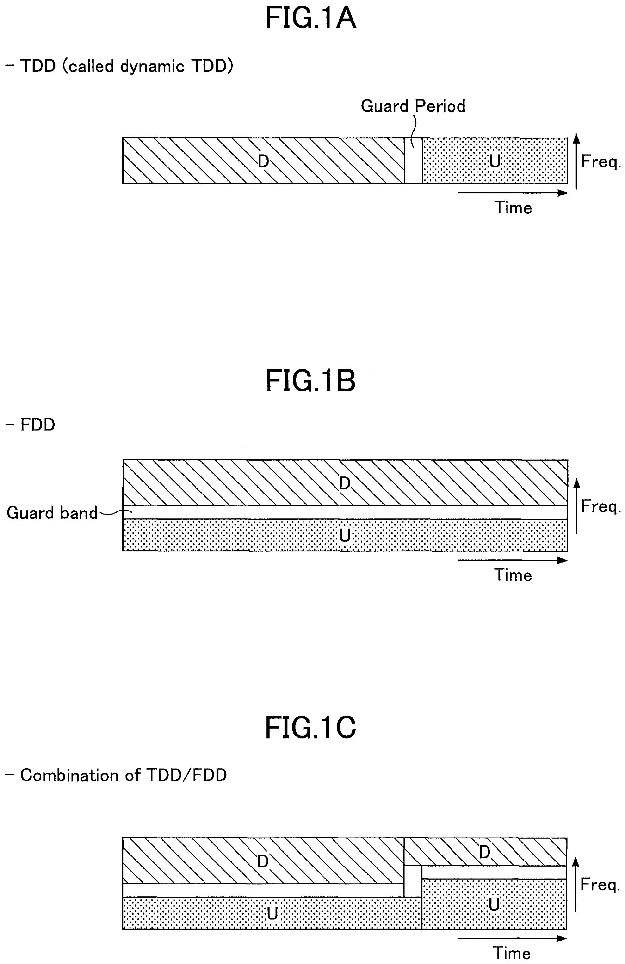

In 3GPP (Third Generation Partnership Project), the next generation communication standards (5G or NR) of LTE (Long Term Evolution) and LTE-Advanced are discussed. In the NR system, a flexible duplex that flexibly controls resources used for downlink communication and uplink communication according to generated downlink traffic and uplink traffic is being studied. As the flexible duplex, there are, for example, a TDD scheme (hereinafter referred to as dynamic TDD (Time Division Duplex)) for dynamically switching uplink resources and downlink resources in the time domain as shown in Fig. 1A, a FDD scheme for dynamically switching uplink resources and downlink resources in the frequency domain as shown in Fig. 1B, and a scheme of combining the TDD scheme and the FDD scheme as show in Fig. 1C. Also, full duplex which simultaneously performs uplink communication and downlink communication with the same resource is also being considered. In the following, as an example, the dynamic TDD is described in more detail.

Typically, it is assumed that the deviation between downlink traffic and uplink traffic is greater for smaller cells compared to larger cells. Therefore, by controlling downlink communication and uplink communication independently using the dynamic TDD in each cell, it becomes possible to accommodate traffic more efficiently.

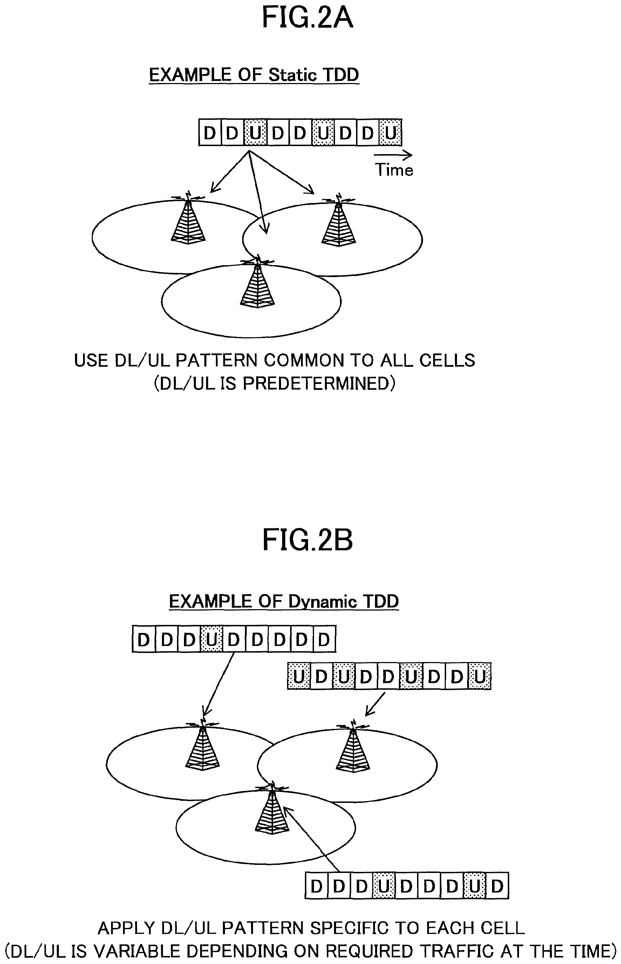

In dynamic TDD, downlink and uplink communication directions are dynamically changed at certain time intervals such as subframe, slot, minislot and so on. That is, as shown in Fig. 2A, in the static TDD applied in LTE, a preconfigured downlink / uplink pattern common among cells is used. On the other hand, in dynamic TDD, a separate downlink / uplink pattern is utilized in each cell as shown in Fig. 2B. Therefore, each cell can dynamically change the downlink and uplink communication directions according to the downlink and uplink traffic volume.

### RELATED ART DOCUMENT

### [NON PATENT DOCUMENT]

[NON PATENT DOCUMENT 1] 3GPP TS 36.211 V14.0.0

### SUMMARY OF THE INVENTION

### PROBLEM TO BE SOLVED BY THE INVENTION

In the NR system, similarly to the LTE system, it is assumed that uplink control information (UCI: Uplink Control Information) is transmitted by an uplink control channel (for example, PUCCH: Physical uplink Control Channel).

However, as described above, when adopting the scheme of flexibly controlling resources used for downlink communication and uplink communication for each cell, for example, uplink communication in a certain cell (referred to as a target cell) receives an interference from downlink communication in another cell (called an interfering cell) so that the possibility that the base station in the target cell cannot appropriately receive the uplink control information from the user apparatus increases. If uplink control information cannot be properly received, data transmission and reception cannot be properly performed, and the performance may be degraded.

The present invention has been made in view of the above points, and an object of the present invention is to provide a technique that enables a base station to properly receive uplink control information in a radio communication system that supports a scheme for flexibly controlling resources for use in downlink communication and uplink communication for each cell.

### MEANS FOR SOLVING THE PROBLEM

According to an embodiment of the present invention, there is provided a user apparatus configured to perform communication with a base station in a radio communication system, including:
a storage unit configured to store configuration information on an aggregated uplink control channel in which a plurality of uplink control channels in a plurality of slots are aggregated; and
a transmission unit configured to transmit uplink control information, to the base station, using the aggregated uplink control channel based on the configuration information.

### EFFECT OF THE PRESENT INVENTION

According to the disclosed technique, there is provided a technique that enables a base station to properly receive uplink control information in a radio communication system that supports a scheme for flexibly controlling resources for use in downlink communication and uplink communication for each cell.

### BRIEF DESCRIPTION OF THE DRAWINGS

Fig. 1A is a diagram for explaining flexible duplex, and shows TDD;
Fig. 1B is a diagram for explaining flexible duplex, and shows FDD;
Fig. 1C is a diagram for explaining flexible duplex, and shows combination;
Fig. 2A is a diagram for explaining static TDD;
Fig. 2B is a diagram for explaining dynamic TDD;
Fig. 3 is a diagram showing a radio communication system in an embodiment of the present invention;
Fig. 4A is a diagram showing an example of an UL/DL pattern in dynamic TDD, and shows pattern 1;
Fig. 4B is a diagram showing an example of an UL/DL pattern in dynamic TDD, and shows pattern 2;
Fig. 4C is a diagram showing an example of an UL/DL pattern in dynamic TDD, and shows pattern 3;
Fig. 5 is a diagram showing an example of a frame configuration in dynamic TDD;
Fig. 6 is a diagram for explaining an UL interference pattern in a target cell;
Fig. 7A is a diagram showing an example of Short PUCCH;
Fig. 7B is a diagram showing an example of Long PUCCH;
Fig. 8A is a diagram showing an example when receiving cross-link interference in UL;
Fig. 8B is a diagram showing an example when not receiving cross-link interference in UL;
Fig. 9A is a diagram for explaining a problem in Short PUCCH;
Fig. 9B is a diagram for explaining a problem in Long PUCCH;
Fig. 10 is a diagram for explaining outline of an aggregated UL control channel;
Fig. 11 is a diagram for explaining an operation example of the system;
Fig. 12 is a diagram for explaining a UCI transmission method example 1;
Fig. 13A is a diagram for explaining a UCI transmission method example 2;
Fig. 13B is a diagram for explaining a UCI transmission method example 2;
Fig. 14A is a diagram for explaining an example of resources for the aggregated UL control channel;
Fig. 14B is a diagram for explaining an example of resources for the aggregated UL control channel;
Fig. 15 is a diagram showing an example for transmitting DCI using frequency hopping;
Fig. 16A is a diagram for explaining A/N transmission method example 1 for DL data;
Fig. 16B is a diagram for explaining A/N transmission method example 1 for DL data;
Fig. 17 is a diagram for explaining A/N transmission method example 2 for DL data;
Fig. 18A is a diagram for explaining an example in a case for transmitting a plurality of UCIs;
Fig. 18B is a diagram for explaining an example in a case for transmitting a plurality of UCIs;
Fig. 19 is a diagram showing an example of a functional configuration of a user apparatus 100;
Fig. 20 is a diagram showing an example of a functional configuration of a base station 200;
Fig. 21 is a diagram showing an example of a hardware configuration of the user apparatus 100 and the base station 200.

### EMBODIMENTS FOR CARRYING OUT THE INVENTION

In the following, an embodiment of the present invention is described with reference to Figures. The embodiment described below is merely an example, and the embodiment to which the present invention is applied is not limited to the embodiment below.

It is assumed that the radio communication system of the present embodiment supports at least the LTE communication scheme. Therefore, when the radio communication system operates, the existing technology prescribed in the existing LTE can be used as appropriate. However, the existing technology is not limited to LTE. Also, "LTE" used in this specification has a broad meaning including LTE-Advanced and schemes after LTE-Advanced unless otherwise specified. Also, the present invention can be applied to communication systems other than LTE.

In the present embodiment, terms such as PUCCH, PUCCH format, UCI, DCI, subframe, slot, RRC, MAC, UE, and the like used in the existing LTE are used for convenience of description, but signals and functions similar to these may be referred to by other names.

Also, in the present embodiment described below, an example in the case where the communication system supports the flexible duplex is shown, but the present invention can be applied even when the flexible duplex is not supported.

### (Configuration of radio communication system)

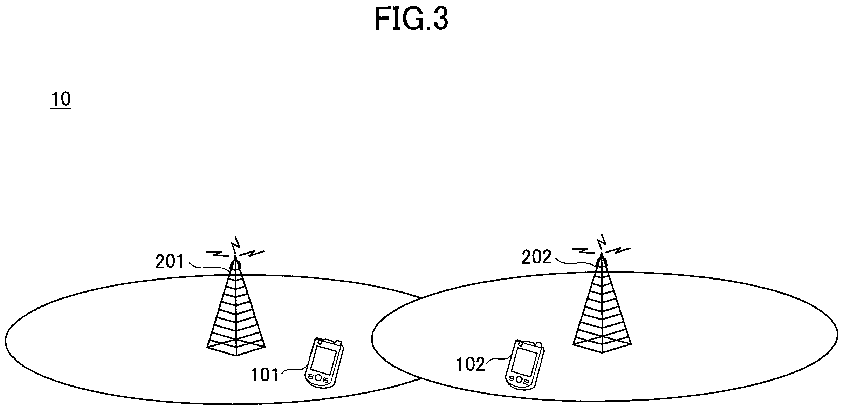

Fig. 3 is a block diagram of a radio communication system in the present embodiment. As shown in Fig. 3, the radio communication system 10 according to the present embodiment includes user apparatuses 101 and 102 (hereinafter collectively referred to as user apparatuses 100) and base stations 201 and 202 (hereinafter collectively referred to as base stations 200). In the following embodiments, the radio communication system 10 supports the flexible duplex that flexibly controls resources used for UL communication and DL communication as described above, and in the present embodiment, description using the dynamic TDD as an example of the flexible duplex is provided mainly. Note that the user apparatus may be referred to as UE, and the base station may be referred to as BS. The present invention can be applied to schemes of flexible duplex other than the dynamic TDD.

The user apparatus 100 is any suitable communication apparatus having a radio communication function such as a smartphone, a mobile phone, a tablet, a wearable terminal, a communication module for M2M (Machine-to-Machine), or the like, and the user apparatus 100 connects to the base station 200 to use various communication services provided by the radio communication system 10.

The base station 200 is a communication apparatus that provides one or more cells and performs radio communication with the user apparatus 100. In the example shown in the figure, two base stations 201, 202 are shown, but in general, a large number of base stations 200 are arranged to cover the service area of the radio communication system 10.

Further, in the radio communication system 10 according to the present embodiment, it is assumed that the cells are synchronized with each other. Therefore, it is assumed that the boundaries of time frames (radio frames, subframes, slots, minislots, etc.) coincide between cells.

For example, when a time position T from the head of a specific slot A is specified in a certain cell and a time position T from the head of the slot A is specified in another cell, the absolute times of both are matched (an error in the range that can be seen matched exists). In the present embodiment, the slot may be referred to as TTI (Transmission Time Interval).

However, the present invention is not limited to the case where the cells are synchronized with each other, and can also be applied to the case where they are not synchronized with each other.

### (On configuration of dynamic TDD)

As described above, since the dynamic TDD is used as an example in the present embodiment, a configuration example of the dynamic TDD in the present embodiment is described.

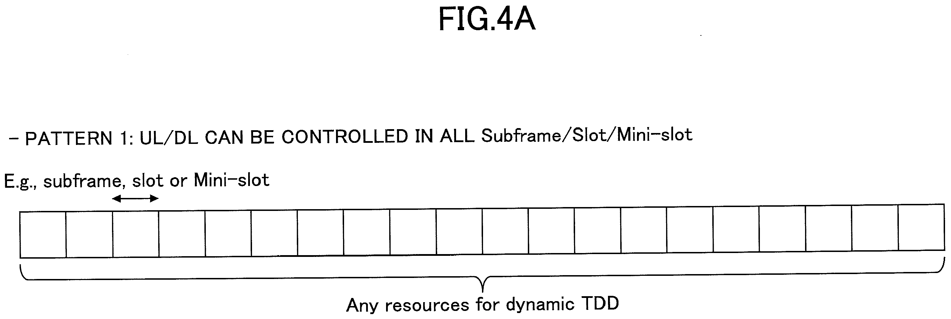

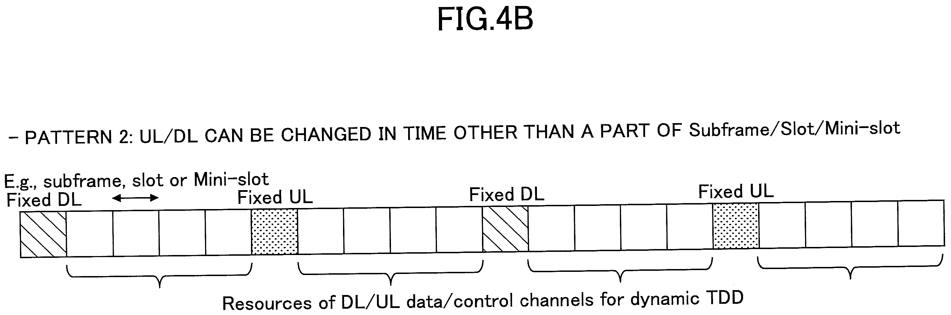

In the dynamic TDD according to the present embodiment, for example, as shown in Figs. 4A to 4C, by several uplink (UL hereinafter) / downlink (DL hereinafter) patterns, UL communication and DL communication are performed. However, it is not limited to these.

In pattern 1 in Fig. 4A, UL communication / DL communication is possible at all time intervals. The "time interval" here is the time width of the square frame shown in Fig. 4A (same for B and C) (width described as "E.g., subframe, slot or Minislot"). This "time interval" may be referred to as TTI.

In pattern 2, UL communication / DL communication is fixedly set at some time intervals, and only the set communication direction is allowed at the time interval. On the other hand, it is possible to switch between UL communication and the Dl communication at other time intervals. In pattern 3, UL communication / DL communication is fixedly set for a part of time intervals and for a certain section within a time interval (in the illustrated example, the sections of both ends within the time interval is fixedly set for DL communication and UL communication), so that only the set communication direction is allowed in the time interval. On the other hand, UL / DL communication is possible at other time intervals.

In the present embodiment, as an example, an embodiment in which the technique of the present invention is applied to pattern 3 is described. Note that, in the pattern 3, the time section in which UL communication/DL communication is fixedly set may not be provided other than in sections of both end within the time interval.

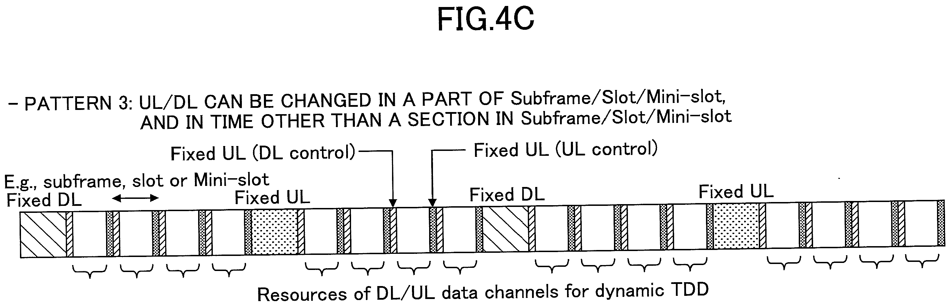

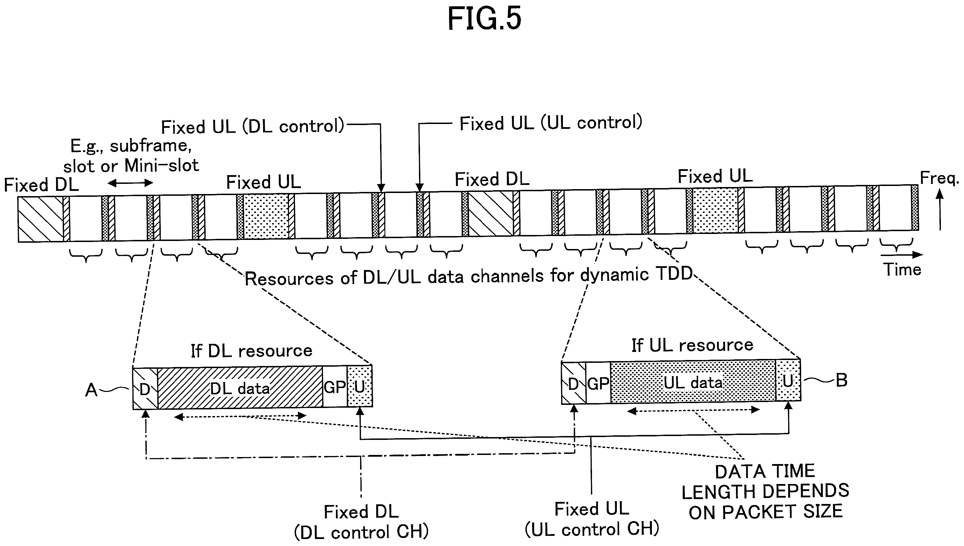

Fig. 5 is a diagram showing the frame configuration of the pattern 3 shown in Fig. 4C in more detail. Hereinafter, for convenience of explanation, the above-mentioned "time interval" is referred to as a slot. However, the slot used below may be replaced with a TTI (transmission time interval), a unit time length frame, a subframe, a minislot, or a radio frame.

The time length of the slot may be a fixed time length that does not change as time elapses, or it may be a time length that varies depending on the packet size and so on. When multiple consecutive slots are used for data communication depending on the packet size and the like, the plurality of consecutive slots may be regarded as one slot.

As shown in Fig. 5, in this example, one slot includes a head time section for downlink control channel (DL control channel section), a time section for data communication (data section) and a last time section for uplink control channel (UL control channel section). Also, a guard section (GP: guard period) is provided between DL and UL for switching.

Whether a data section in a slot is DL or UL is semistatically determined, for example. In this case, for example, an UL or DL pattern and the like in a slot set (example: pattern indicated in non-patent document 1) is notified by an upper layer signaling (RRC signaling and the like) from the base station 200 to the user apparatus 100.

Whether a data section of a slot is DL or UL is may be dynamically determined. In this case, for example, in the DL control channel section in slots shown as A, B of Fig. 5, the user apparatus 100 receives, from the base station 200, downlink control information including designation of DL or UL by a DL control channel, so that the user apparatus 100 performs UL data transmission or DL data reception in accordance with the designation.

In the case in which the data section in a slot is DL as indicated by A, the user apparatus 100 transmits, for example, ACK/NACK for DL data in an UL control channel section of the slot. Also, as indicated by B, when the data section of slot is UL, the user apparatus 100 transmits, for example, ACK/NACK for DL data received before the slot in an UL control channel section of the slot.

### (On interference pattern)

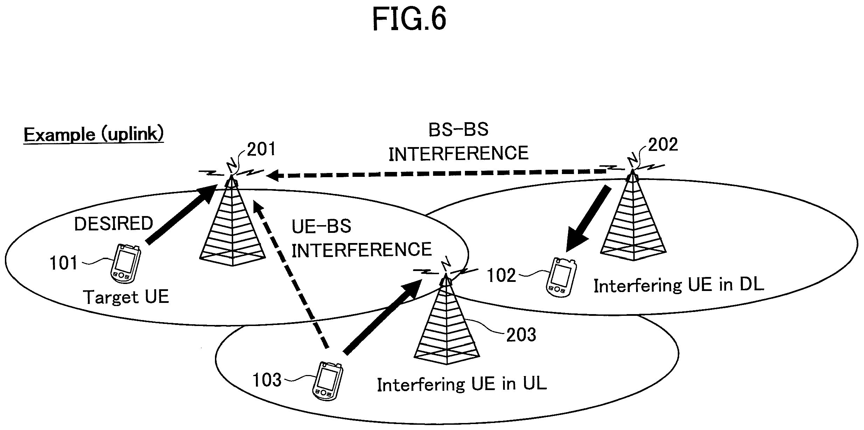

In the present embodiment, in the target cell (that may be referred to as a serving cell), it is possible that the base station 200 receives the uplink control information (that is also referred to as UCI(Uplink Control Information) hereinafter) transmitted from the user apparatus 100 of the target cell without being influenced by the cross link interference from the other cell (interference cell). For explaining the mechanism that enables it, first, interference patterns of UL communication are described with reference to Fig. 6. Fig. 6 also shows a base station 203 and a user apparatus 103 in addition to the base stations 201 and 202 and the user apparatuses 101 and 102. In Fig. 6, the cell of the base station 201 is the target cell, and the cell of the base station 202 and the cell of the base station 203 are both interference cells. As shown in Fig. 6, a DL signal from the base station of the neighboring cell (the base station 202 in Fig. 6) and the UL signal from the user apparatus of the neighboring cell (the user apparatus 103 in Fig. 6) are interfered. In a situation where cell density is increased with the recent spread of smart phones and the like, the interference, to a desired UL communication, caused by the DL signal transmitted by the base station 202 of the neighboring cell becomes large.

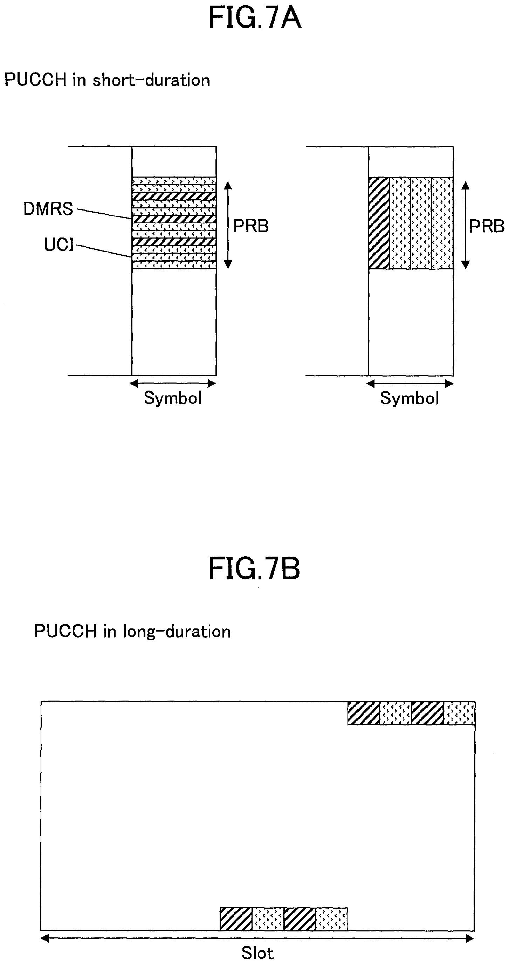

By the way, in NR, two types of PUCCHs which are Short PUCCH and Long PUCCH are being studied. Fig. 7A shows an example of Short PUCCH. The Short PUCCH is mapped, for example, to the last short time length of a slot (example: 1 OFDM symbol). Fig. 7B shows an example of Long PUCCH. The Long PUCCH is mapped, for example, to a long time length (example: a plurality of OFDM symbols) as shown in Fig. 7B.

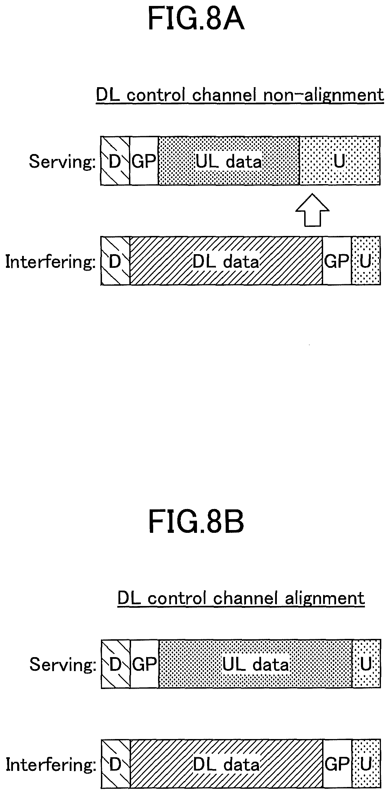

Fig. 8A shows an example of a case where, in a slot, a DL data channel of a base station of an interference cell causes interference to an UL control channel of a target cell. In the case of Fig. 8A, since the time length of the UL control channel section of the slot in the target cell is long, a part of the UL control channel section overlaps with a part of the DL data section of a slot in the interference cell. Therefore, interference occurs.

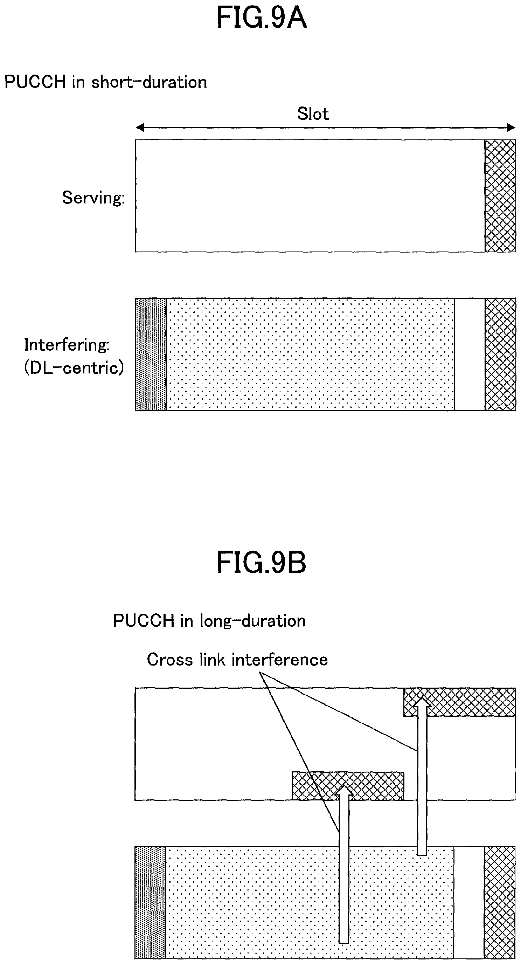

In order to avoid interference shown in Fig. 8A, as shown in Fig. 8B, it can be considered to set the position of the UL control channel section and the time length (the number of OFDM symbols and the like) between cells (between base stations) to be equal (to be fixed). However, in this case, it is conceivable that the same amount of UL control channel is used for both the high traffic cell and the low traffic cell, thereby lowering the resource use efficiency as a whole. In the case in which the above-mentioned Short PUCCH and Long PUCCH are used, as shown in Fig. 9B, the Long PUCCH receives cross-link interference. In order to avoid cross-link interference, it is conceivable to use only Short PUCCH as shown in FIG. 9A, but coverage is restricted in Short PUCCH.

Therefore, in the present embodiment, the aggregated UL control channel (Aggregated Uplink Control Channel) described below is used. The aggregated UL control channel may be referred to as aggregated UL control channel.

In the radio communication system of the present embodiment using the aggregate UL control channel, as shown in FIG. 8B, it is presumed that the position and the time length of the UL control channel section in each slot are the same between the cells. This premise is an example, and it is not limited to this premise. In each cell (each user equipment), the position and the time length of the UL control channel section may be the same or different between the slots. However, in the example described below, an example of a case is shown in which the position and the time length of the UL control channel section are the same between the slots. Also, in the following, the channel transmitted in the UL control channel section in one slot is described as one UL control channel.

### (Outline of aggregated UL control channel)

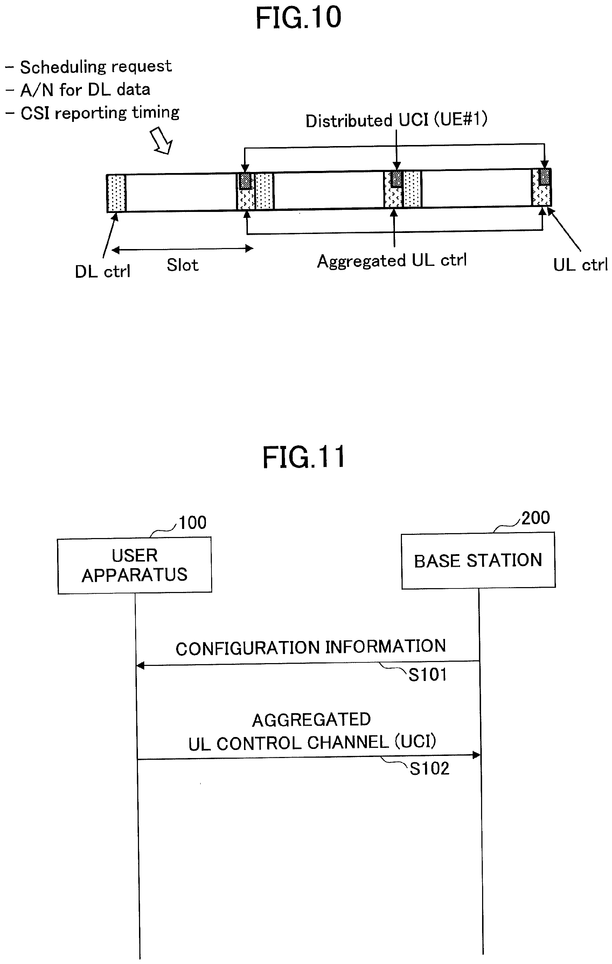

An outline of the aggregated UL control channel is described with reference to Fig. 10. The aggregated UL control channel consists of UL control channels of a plurality of slots. For example, in the example of Fig. 10, UL control channels of three slots are aggregated so that one aggregated UL control channel is configured. Note that, in Fig.10, the horizontal axis is time and the vertical axis is frequency. The width of the band in the vertical direction is, for example, the system bandwidth. Same applies to the following Figures.

For example, the resource amount occupied by the aggregated UL control channel is reported from the base station 200 to the user apparatus 100 by DCI, MAC signal, broadcast information, or higher layer signaling, so that the user apparatus 100 uses the channel of the reported resource amount as an aggregated UL control channel. For example, the user apparatus 100 transmits a UCI using the aggregated UL control channel. Note that, in the present embodiment, the time resource amount is focused on as a resource amount, however, the recourse amount in the frequency direction may be included so that the amount may be reported by an a higher layer signaling and the like.

The designation content of the resource amount is a number of slots, for example. For example, when three slots are designated as the resource amount, a channel in which UL control channels of three slots are aggregated is used as an aggregated UL control channel. Also, the designation content of the resource amount may be the number of OFDM symbols. For example, it is assumed that the number of OFDM symbols of the UL control channel of each slot is predetermined as K, or that the number of OFDM symbols of the UL control channel of each slot is specified from the base station 200 to the user apparatus 100 as K. At this time, for example, if 3K is notified from the base station 200 to the user apparatus 100 as designation of the resource amount of the aggregated UL control channel, the user apparatus 100 uses three slots of ULL control channels as an aggregated UL control channel. The base station 200 holds designated content (configuration information) designated to the user apparatus 100, so that the base station 200 receives the UCI from the user apparatus 100 using the aggregated UL control channel in which three slots of UL control channels are aggregated.

When using a plurality of slots of UL control channels as the aggregated UL control channel, the plurality of slots may not be continuous. Also, as to the designation of the resource amount and the like from the base station 200, it may be UE specific or it may be UE common (Cell specific).

For example, the user apparatus 100 can map a UCI to UL control channels of all slots that form the aggregated UL control channel and transmit it. Also, the user apparatus 100 can map a UCI to UL control channels of a part of slots of UL control channels in all slots that form the aggregated UL control channel, and transmit it.

The mapping example shown in Fig. 10 is an example in which the user apparatus 100 maps one UCI to UL control channels of a plurality of slots forming an aggregated UL control channel. The UCI mapped in this way is referred to as Distributed UCI in the present embodiment. In the Distributed UCI shown in Fig.10, the base station 200 performs decoding processing and the like of the UCI by assuming that one UCI is mapped to the aggregated UL control channel (example: UL control channels of three slots).

One UCI is, for example, information about the content of a single PUCCH format, but is not limited to this. For example, one UCI includes one, or a plurality of, or all of SR (Scheduling request), ACK/NACK (A/N hereinafter) of DL data, and CSI (Channel State Information). CSI includes one, or a plurality of, or all of CQI (Channel Quality Indicator), PMI (precoding matrix indicator), PTI (precoding type indicator), and RI (rank indication). The user apparatus 100 may transmit an SRS (Sounding Reference Signal) using an UL control channel that constitutes an aggregated UL control channel.

By introducing the aggregated UL control channel of the present embodiment, it is possible to flexibly change the resource amount of the UL control channel that can be used for transmission of UCI while avoiding cross-link interference from the interfering cell. As a result, the resource use efficiency of the system can be improved.

### (Operation example of the system)

A basic operation example of the system according to the present embodiment is described with reference to Fig.11. In step S101, configuration information is transmitted from the base station 200 to the user apparatus 100. The configuration information includes all or a part of designation of a resource amount of the aggregated UL control channel, and designation of transmission method of UCI. Also, information other than these may be included. The configuration information is transmitted by a DCI, an RRC signal, a MAC signal or broadcast information. Also, the configuration information may not be transmitted from the base station 200 to the user apparatus 100, and the configuration information may be preconfigured in the base station 200 and the user apparatus 100.

The user apparatus 100 holds, in a storage unit, the configuration information notified from the base station 200 (or preconfigured configuration information), and also the base station 200 holds the configuration information in a storage unit. The base station 200 receives a UCI by the aggregated UL control channel based on the configuration information. Also, the user apparatus 100 performs operation of transmitting a UCI by the aggregated UL control channel based on the holding configuration information. For example, in the case in which the user apparatus 100 uses an aggregated UL control channel including three slots of UL control channels for the base station 200, the base station 200 can recognize that the UCI is transmitted by the aggregated UL control channel including three slots of DL control channels from the user apparatus 100 based on the configuration information.

In step S102, a UCI is transmitted by the aggregated UL control channel from the user apparatus 100 to the base station 200 by the method according to the configuration information. Then, for example, the base station 200 performs operation based on the UCI such as retransmission.

Hereinafter, specific examples of processing methods of UCI transmission and the like by the aggregated UL control channel are described. The examples described below can be implemented by arbitrarily combining them as long as there is no inconsistency.

### (UCI transmission method example)

Next, examples of methods for transmitting a UCI from the user apparatus 100 to the base station 200 are described.

### <UCI transmission method example 1>

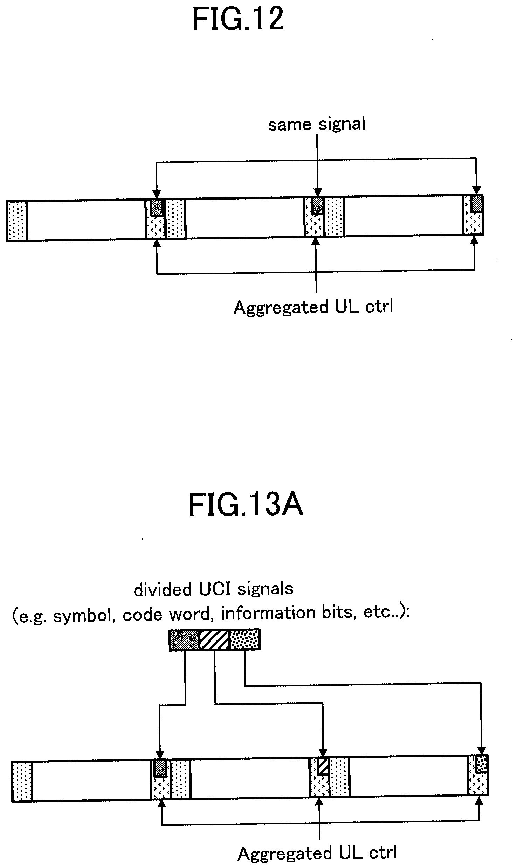

Fig. 12 is a diagram for explaining the UCI transmission method example 1. In the UCI transmission method example 1, the user apparatus 100 repeatedly transmits one UCI (a plurality of UCIs may be transmitted) for the base station 200. The repetition is an example of the Distributed UCI. In the example of Fig. 12, the UCI is repeatedly transmitted three times by using three slots. Note that the number of times of repetition is designated from the base station 200 to the user apparatus 100 by the configuration information of step S101 of Fig. 11, for example.

For example, the base station 200 may determine the number of times of repetition for the user apparatus 100 based on reception quality (example : RSRQ, RSRP, or RS-SINR) of a signal received from the user apparatus 100. For example, if the reception quality is bad, the number of times of repletion is increased.

As described above, by performing repeated transmission, even when reception quality in the base station 200 is not good, the base station 200 can receive the UCI.

### <UCI transmission method example 2>

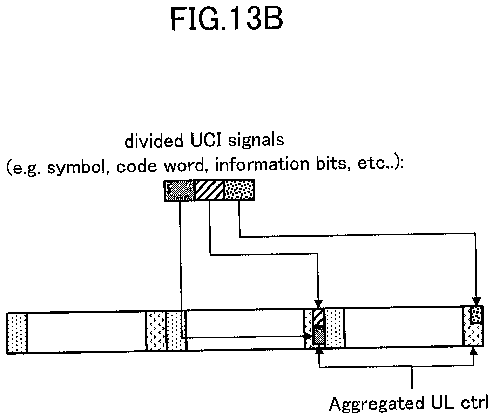

Figs. 13A and 13B are diagrams for explaining the UCI transmission method example 2. Also, the UCI transmission method example 2 is an example of the before-mentioned Distributed UCI. In the UCI transmission method example 2, the user apparatus 100 divides a UCI for the base station 200 into a plurality of parts, maps the plurality of divided parts to UL control channels of a plurality of slots that form an aggregated UL control channel, and transmits the parts.

In the examples of Fig. 13A and 13B, the UCI is divided into three. As a dividing method, for example, there are division in units of symbols, division in units of codewords, and division in units of information bits. Also, division may be performed in units of content (example: SR, A/N, CSI) .

In the example of Fig. 13A, the user apparatus 100 maps each of the three parts obtained by dividing to an UL control channel of a different slot. On the other hand, in the example of Fig. 13B, since the aggregated UL control channel is formed by two slots of UL control channels, two divided parts of the three divided parts are mapped to the UL control channel of one slot, and the remaining one divided part is mapped to UL control channel of anoother slot.

As described above, by transmitting the UCI by dividing it, a UCI of large information amount can be transmitted. Note that the before-mentioned repeated transmission may be applied to each divided part.

### (Resource example of aggregated UL control channel)

Next, an example of the resource of the aggregated UL control channel is described from the viewpoint of timing of UCI transmission by the user apparatus 100.

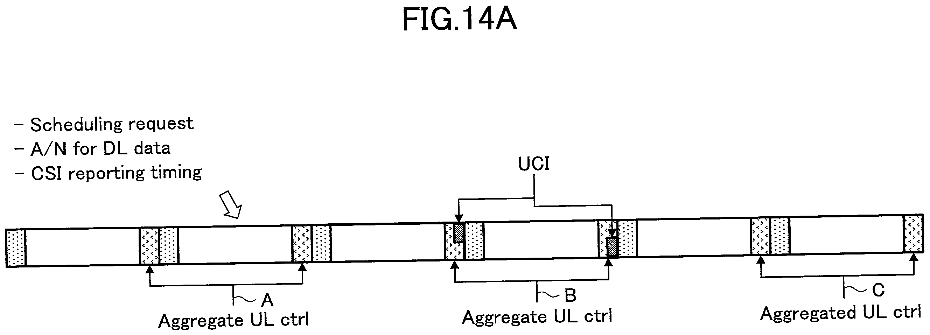

The example of Fig. 14A is an example in which UL control channels (resources) are not overlapped between aggregated UL control channels formed by UL control channels of a plurality of slots. For example, in Fig. 14A, the two aggregated UL control channels are separated and not overlapped as indicated by A, B and C. In this case, for example, when UCI transmission timing occurs at the timing of the slot of the aggregated UL control channel indicated by A, the user apparatus 100 transmits the UCI using the aggregated UL control channel indicated by B next to that.

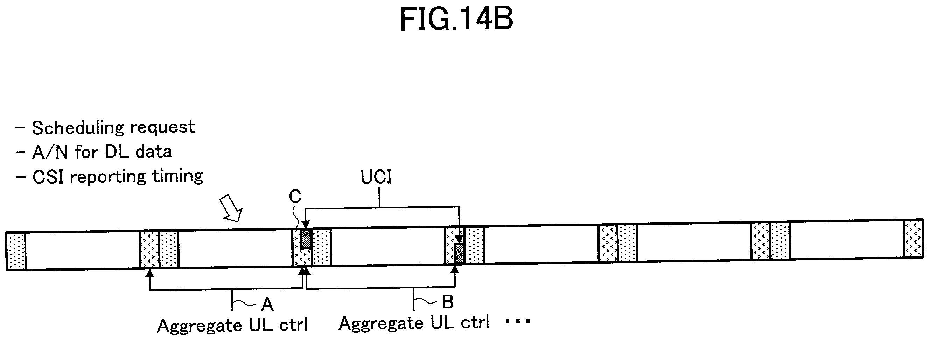

The example shown in Fig. 14B is an example in which overlapping of UL control channels (resources) is allowed between aggregated UL control channels each being formed by a plurality of slots of DL control channels. For example, in the Fig. 14B, the aggregated UL control channel indicated by A and the aggregated UL control channel indicated by B overlap at a part of the UL control channel indicated by C. In this case, when UCI transmission timing occurs at the timing of the slot of the aggregated UL control channel indicated by A, the user apparatus 100 transmits the UCI using the aggregated UL control channel indicated by B right after that.

### (Example for using frequency hopping)

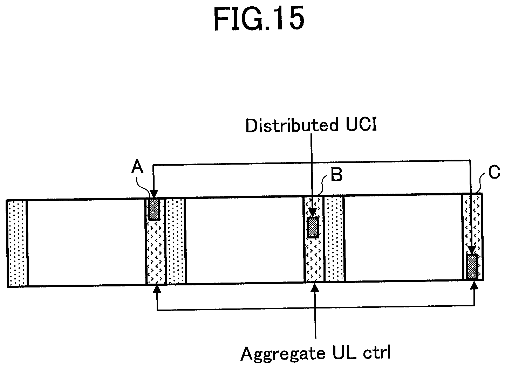

As shown in Fig. 15, in a case in which the Distributed UCI is used, the user apparatus 100 can apply frequency hopping among a plurality of UL control channels that form the aggregated UL control channel. In the example of Fig. 15, the frequency position of the mapped UCI (one UCI or divided UCI) is different among the UL control channel A, the DL control channel B and the UL control channel C that form the aggregated UL control channel.

As to the hopping pattern, it may be configured from the base station 200 to the user apparatus 100 by configuration information, or it may be preconfigured in the base station 200 and the user apparatus 100. Also, each of the base station 200 and the user apparatus 100 may calculate a hopping pattern using a parameter (example: UE-ID) specific to the user apparatus 100, so that the user apparatus 100 may transmit a UCI using the hopping pattern and the base station 200 may receive the DCI using the hopping pattern.

### (Example of A / N transmission method for DL data)

Next, an example of a transmission method of A / N which is an example of UCI is described. Which A/N transmission method to use for transmitting A/N may be configured from the base station 200 to the user apparatus 100, for example, according to the configuration information shown in step S101 of FIG. 11, or may be preconfigured in the base station 200 and the user apparatus 100.

### <Example 1 of A / N transmission method for DL data>

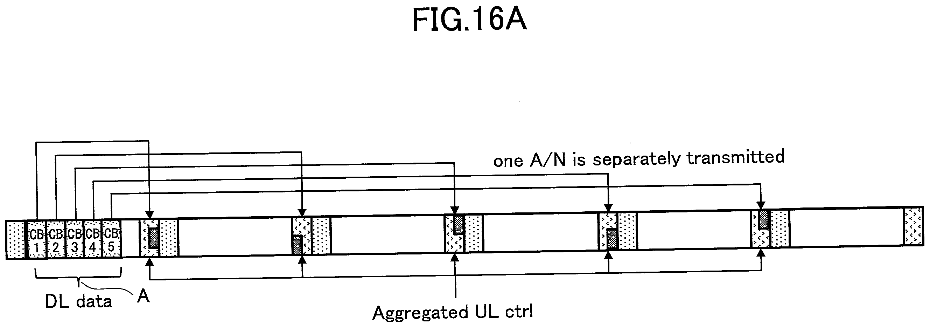

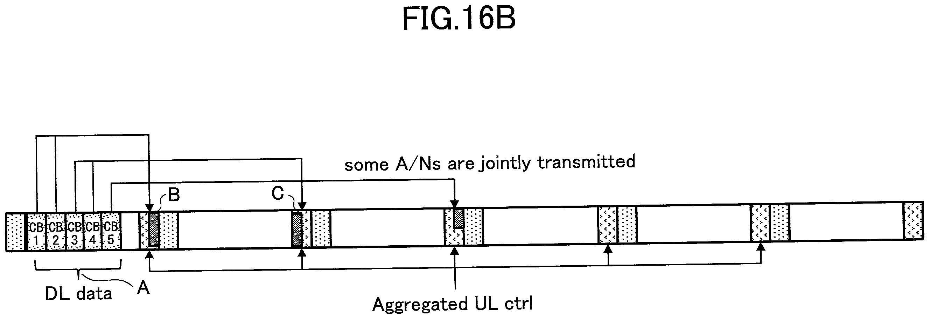

With reference to Figs. 16A and 16B, an A / N transmission method example 1 for DL data is described. In the A / N transmission method example 1, the user apparatus 100 transmits an A / N using the UL control channels that form the aggregated UL control channel for each code block of the DL data channel.

In the example of Fig. 16A, the user apparatus 100 transmits A / N for each code block in a plurality of code blocks constituting DL data indicated by A on separate UL control channels.

In the example of Fig. 16B, it is allowed to transmit a plurality of A / Ns on one UL control channel. In this example, the user apparatus 100 transmits A / N for CB 1 and A / N for CB 2 in DL data indicated by A on the UL control channel indicated by B, and transmits the A / N for CB 3 and the A / N for CB 4 on the UL control channel indicated by C.

By transmitting the A / N on a separate UL control channel for each code block as in the A / N transmission method example 1, the base station 200 can determine retransmission necessity on a code block basis, so that resources required for retransmission are reduced, and resource use efficiency improves.

### <A/N transmission method example 2 for DL data>

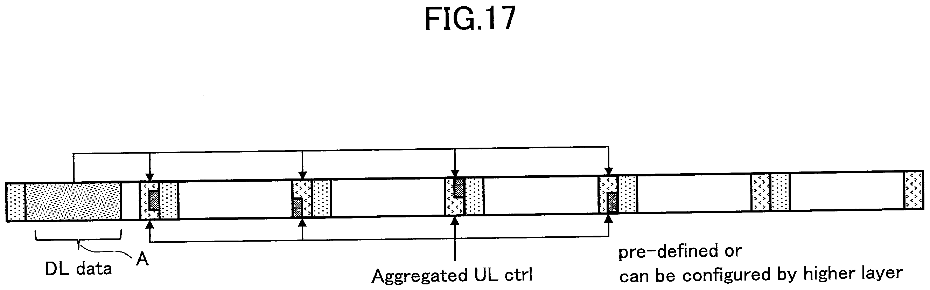

Fig. 17 shows an A / N transmission method example 2 for DL data. In the A / N transmission method example 2, for example, the user apparatus 100 expresses the A / N for each CB or every predetermined number of bits in the DL data with a bit map and transmits the bit map with the aggregated UL control channel. In the A / N transmission method example 2, the base station 200 can efficiently confirm the A / N for each CB or every predetermined number of bits by checking the bit map received on the aggregated UL control channel and it is possible to efficiently judge whether or not to retransmit the entire DL data.

### (Example for transmitting a plurality of UCIs)

The user apparatus 100 may transmit a plurality of UCIs to the base station 200 using the aggregated UL control channel. The number of the plurality of UCIs may be predetermined or may be configured by configuration information transmitted from the base station 200 to the user apparatus 100 (S101 in Fig. 11). Also, each UCI contains different information.

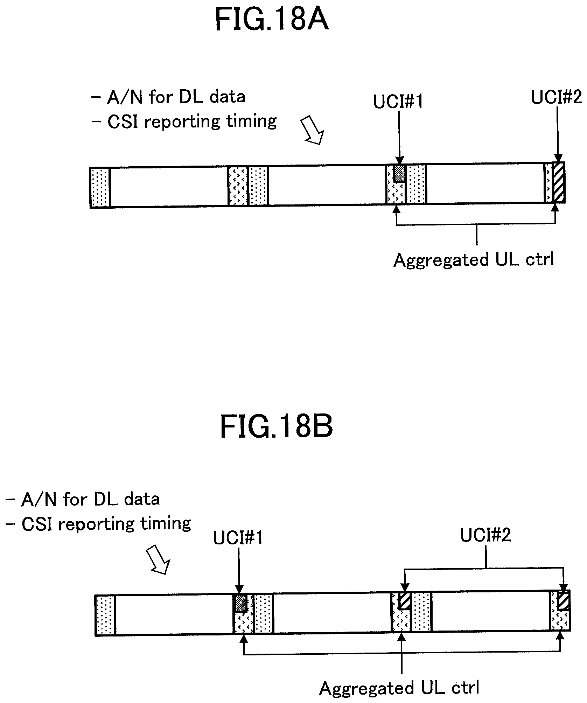

Fig. 18A shows an example in which the user apparatus 100 transmits two UCIs by one aggregated UL control channel. In the example of Fig. 18A, for example, A / N (example: 2 bits) for DL data is included in UCI # 1. For example, UCI # 2 includes CSI feedback information (example: 16 bits).

Further, the user apparatus 100 may transmit CQI, PMI, PTI, and RI constituting the CSI by separate UCIs, may transmit any two or three of CQI, PMI, PTI, and RI by one UCI and transmit other information by separate UCI.

As shown in Fig. 18B, in the case where the user apparatus 100 transmits a plurality of UCIs to the base station 200 using the aggregated UL control channel, a Distributed UCI may be used. In the example of Fig. 18B, UCI # 1 is transmitted by one UL control channel and UCI # 2 is transmitted by two UL control channels.

### (On PUCCH format)

In the present embodiment in which the aggregated UL control channel is used, the number of slots for transmitting the UCI may be determined for each UCI information that the user apparatus 100 intends to transmit, or for each PUCCH format to be used. The number of slots may be preconfigured in the base station 200 and the user apparatus 100 or may be notified from the base station 200 to the user apparatus 100 as configuration information (S101 in Fig. 11).

For example, when transmitting SR and A/N as a UCI, or when using the PUCCH format for transmitting SR and A/N, the user apparatus 100 uses an UL control channel of one slot. Also, for example, when transmitting CSI as UCI, or when using a PUCCH format for transmitting CSI, the user apparatus 100 uses UL control channels of six slots.

As described above, since the number of slots for transmitting UCI is determined according to the content of UCI or to the PUCCH format, the user apparatus 100 can efficiently transmit UCI compared with the case in which it is not so.

### (Apparatus configuration)

Functional configuration examples of the user apparatus 100 and the base station that execute operation of the embodiment described above are described. The user apparatus 100 and the base station 200 have all the functions described in the present embodiment. However, the user apparatus 100 and the base station 200 may have a part of the functions described in the present embodiment.

### <User apparatus 100>

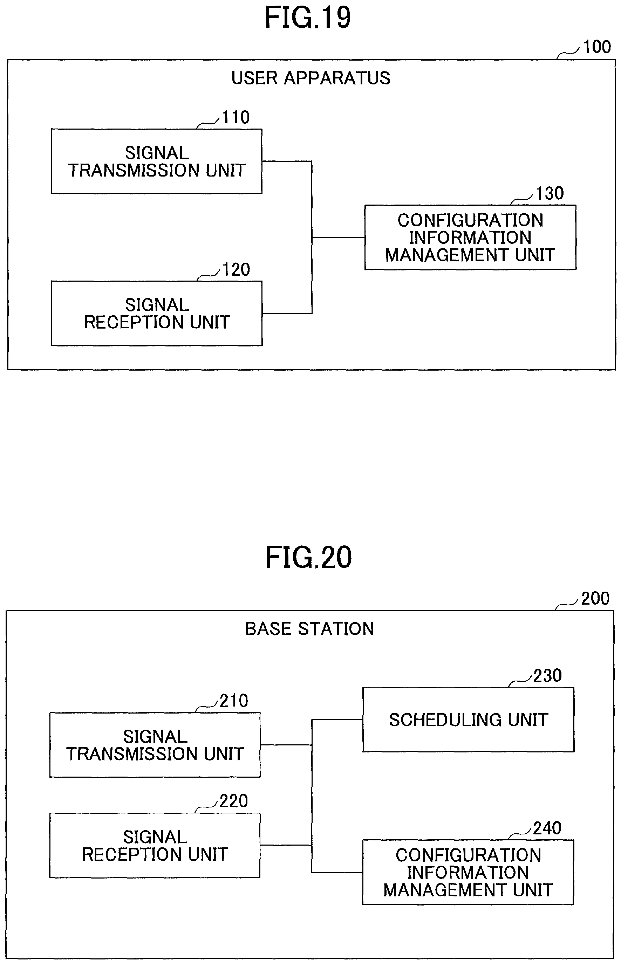

Fig. 19 is a diagram illustrating an example of a functional configuration of the user apparatus 100. As illustrated in Fig. 19, the user apparatus 100 includes a signal transmission unit 110, a signal reception unit 120, and a configuration information management unit 130. The functional configuration illustrated in Fig.19 is only an example. Functional subdivision and names of the functional units are not particularly limited as long as the operations associated with the embodiment can be performed. The signal transmission unit 110 may be referred to as a transmitter, and the signal reception unit 120 may be referred to as a receiver.

The signal transmission unit 110 is configured to generate a lower-layer signal from the upper-layer information and transmit the signal by radio. The signal reception unit 120 is configured to receive various signals by radio and to acquire information of the upper layer from the received signals. Also, based on the configuration information in the configuration information management unit 130, the signal transmission unit 110 transmits the UCI by the aggregated UL control channel and transmits the UL data based on the DCI received from the base station 200. Also, the signal reception unit 120 receives DL data based on DCI.

The configuration information management unit 130 has a storage unit for storing preconfigured configuration information and configuration information configured from the base station 200 and the like in a dynamic and / or semi-static manner. For example, the configuration information management unit 130 stores configuration information received from the base station 200 in step S101 of Fig.11.

For example, the configuration information management unit 130 is configured to store configuration information on an aggregated uplink control channel in which a plurality of uplink control channels in a plurality of slots are aggregated; and the signal transmission unit 110 is configured to transmit uplink control information, to the base station, using the aggregated uplink control channel based on the configuration information.

For example, the signal transmission unit may repeatedly transmit the uplink control information using each uplink control channel in the plurality of slots, or transmit partial information obtained by dividing the uplink control information using each uplink control channel in the plurality of slots. Also, for example, the signal transmission unit 110 may transmit the uplink control information by applying frequency hopping among the plurality of slots. Also, for example, the signal transmission unit 100 may transmit, to the base station, a plurality of pieces of uplink control information each including different information by using the aggregated uplink control channel.

### <Base Station 200>

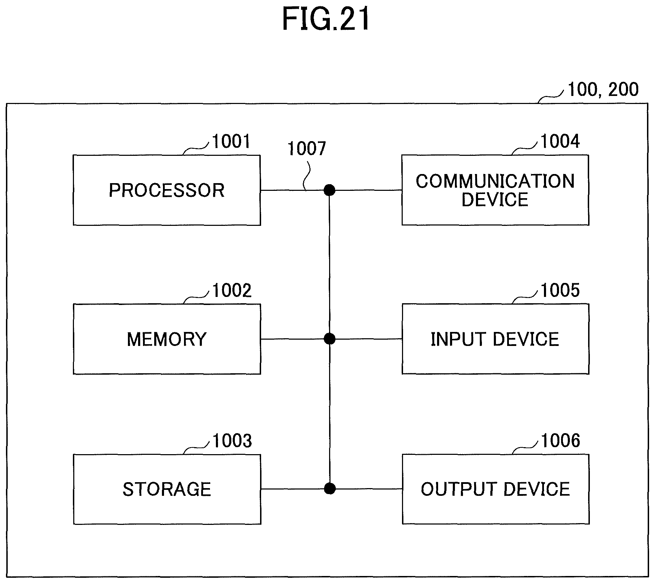

Fig. 20 is a diagram illustrating an example of a functional configuration of the base station 200. As illustrated in Fig. 21, the base station 200 includes a signal transmission unit 210, a signal reception unit 220,a scheduling unit 230 and a configuration information management unit 240.

The functional configuration illustrated in Fig. 20 is only an example. Functional subdivision and names of the functional units are not particularly limited as long as the operations associated with the embodiment can be performed. The signal transmission unit 210 may be referred to as a transmitter, and the signal reception unit 220 may be referred to as a receiver.

The signal transmission unit 210 is configured to generate a lower-layer signal from the upper-layer information and transmit the signal by radio. The signal reception unit 220 is configured to receive various signals by radio and to acquire information of the upper layer from the received signals.

Also, based on the configuration information in the configuration information management unit 240, the signal reception unit 220 receives the UCI through the aggregated UL control channel, and receives UL data based on the contents of the transmitted DCI transmitted to the user apparatus 100. Also, the signal transmission unit 210 transmits DL data based on content of the transmitted DCI to the user apparatus 100.

The scheduling unit 230 performs resource allocation to the user apparatus 100, and the like. The configuration information management unit 240 has a storage unit for storing preconfigured configuration information, and the configuration information management unit 240 determines configuration information to be configured in the user apparatus 100 in a dynamic and / or semi-static manner, and holds it.

For example, the configuration information management unit 240 is configured to store configuration information on an aggregated uplink control channel in which a plurality of uplink control channels in a plurality of slots are aggregated; and the signal reception unit 220 is configured to receive uplink control information, from the user apparatus, using the aggregated uplink control channel based on the configuration information. Also, for example, the signal reception unit 220 may repeatedly receive the uplink control information by each uplink control channel in the plurality of slots, or may receive partial information obtained by dividing the uplink control information by each uplink control channel in the plurality of slots.

### <Hardware Configuration>

The block diagrams (Figs. 19 and 20) which are used above to describe the embodiments illustrate blocks in the units of functions. The functional blocks (constituent units) are embodied in an arbitrary combination of hardware and/or software. Means for embodying the functional blocks is not particularly limited. That is, the functional blocks may be embodied by one unit in which a plurality of components are physically and/or logically coupled, or may be embodied by two or more devices which are physically and/or logically separated and which are connected directly and/or indirectly (for example, in a wired and/or wireless manner).

For example, the user apparatus 100 and the base station 200 according to this embodiment may function as computers that perform the processes according to this embodiment. Fig. 21 is a diagram illustrating an example of a hardware configuration of the user apparatus 100 and the base station 200 according to this embodiment. The user apparatus 100 and the base station 200 may be physically configured as a computer device including a processor 1001, a memory 1002, a storage 1003, a communication device 1004, an input device 1005, an output device 1006, and a bus 1007.

In the following description, a word "device" may be referred to as a circuit, a device, a unit, or the like. The hardware configurations of the user apparatus 100 and the base station 200 may include one or more devices indicated by reference numerals 1001 to 1006 in the drawing or may not include some devices thereof.

The functions of the user apparatus 100 and the base station 200 are realized by causing hardware such as the processor 1001 and the memory 1002 to read predetermined software (a program) and causing the processor 1001 to perform calculation and to control communication of the communication device 1004 and reading and/or writing of data in the memory 1002 and the storage 1003.

The processor 1001 controls the computer as a whole, for example, by activating an operating system. The processor 1001 may be constituted by a central processing device (CPU : central processing unit) including an interface with peripherals, a control device, a calculation device, a register, and the like.

The processor 1001 reads a program (program codes), a software module, or data from the storage 1003 and/or the communication deice 1004 to the memory 1002 and performs various processes in accordance therewith. As the program, a program causing a computer to perform at least a part of the operations described above in the embodiment is used. For example, the signal transmission unit 110, the signal reception unit 120, and the configuration information managing unit 130 of the user apparatus 100 shown in Fig. 19 may be embodied by a control program which is stored in the memory 1002 and operated by the processor 1001. The signal transmission unit 210, the signal reception unit 220, the scheduling unit 230 and the configuration information management unit 240 of the base station 200 shown in Fig. 20 may be embodied by a control program which is stored in the memory 1002 and operated by the processor 1001. Various processes described above have been described to be performed by a single processor 1001, but may be simultaneously or sequentially performed by two or more processors 1001. The processor 1001 may be mounted as one or more chips. The program may be transmitted from a network via an electric communication line.

The memory 1002 is a computer-readable recording medium and may be constituted, for example, by at least one of a read only memory (ROM), an erasable programmable ROM (EPROM), an electrically erasable programmable ROM (EEPROM), and a random access memory (RAM). The memory 1002 may be referred to as a register, a cache, or a main memory (a main storage device). The memory 1002 can store a program (program codes), a software module, or the like which can be executed to perform the processes according to the embodiment.

The storage 1003 is a computer-readable recording medium and may be constituted, for example, by at least one of an optical disc such as a compact disc ROM (CD-ROM), a hard disk drive, a flexible disk, a magneto-optical disk (such as a compact disk, a digital versatile disk, or a Blu-ray (registered trademark) disk), a smart card, a flash memory (such as a card, a stick, or a key drive), a floppy (registered trademark) disk, and a magnetic strip. The storage 1003 may be referred to as an auxiliary storage device. Examples of the recording medium may include a database including the memory 1002 and/or the storage 1003, a server, and another appropriate medium.

The communication device 1004 is hardware (a transceiver device) that allows communication between computers via a wired and/or wireless network and is referred to as, for example, a network device, a network controller, a network card, or a communication module. For example, the signal transmission unit 110 and the signal reception unit 120 of the user apparatus 100 may be embodied by the communication device 1004. The signal transmission unit 210 and the signal reception unit 220 of the base station 200 may be embodied by the communication device 1004.

The input device 1005 is an input device (such as a keyboard, a mouse, a microphone, a switch, a button, or a sensor) that receives an input from the outside. The output device 1006 is an output device (such as a display, a speaker, or an LED lamp) that performs outputting to the outside. The input device 1005 and the output device 1006 may be configured as a unified body (such as a touch panel).

The devices such as the processor 1001 and the memory 1002 are connected to each other via the bus 1007 for transmitting and receiving information. The bus 1007 may be constituted by a single bus or may be configured by different buses for the devices.

The user apparatus 100 and the base station 200 may be configured to include hardware such as a microprocessor, a digital signal processor (DSP), an application specific integrated circuit (ASIC), a programmable logic device (PLD), or a field programmable gate array (FPGA), or a part or all of the functional blocks may be embodied by the hardware. For example, the processor 1001 may be implemented by at least one hardware module of these.

### (Summary of Embodiments)

As described above, according to the present embodiment, there is provided a user apparatus configured to perform communication with a base station in a radio communication system, including: a storage unit configured to store configuration information on an aggregated uplink control channel in which a plurality of uplink control channels in a plurality of slots are aggregated; and a transmission unit configured to transmit uplink control information, to the base station, using the aggregated uplink control channel based on the configuration information.

According to the above-configuration, it becomes possible to enable a base station to properly receive uplink control information in a radio communication system that supports a scheme for flexibly controlling resources for use in downlink communication and uplink communication for each cell.

For example, the transmission unit repeatedly transmits the uplink control information using each uplink control channel in the plurality of slots, or transmits partial information obtained by dividing the uplink control information using each uplink control channel in the plurality of slots.

By repeatedly transmitting uplink control information, for example, even a base station with poor reception quality can properly receive the uplink control information. By transmitting the partial information obtained by dividing the uplink control information, for example, it is possible to appropriately transmit large downlink control information with a large amount of information.

The transmission unit may transmit the uplink control information by applying frequency hopping among the plurality of slots. According to this configuration information, for example, even if the quality of a particular frequency resource is not good, the base station can receive the uplink control information properly.

The transmission unit may transmit, to the base station, a plurality of pieces of uplink control information each including different information by using the aggregated uplink control channel.. According to this configuration, content of uplink control information with large information amount can be properly received.

Also, according to the present embodiment, there is provided a base station configured to perform communication with a user apparatus in a radio communication system, including: a storage unit configured to store configuration information on an aggregated uplink control channel in which a plurality of uplink control channels in a plurality of slots are aggregated; and a reception unit configured to receive uplink control information, from the user apparatus, using the aggregated uplink control channel based on the configuration information.

According to the above-configuration, it becomes possible to enable a base station to properly receive uplink control information in a radio communication system that supports a scheme for flexibly controlling resources for use in downlink communication and uplink communication for each cell.

The reception unit may repeatedly receive the uplink control information by each uplink control channel in the plurality of slots, or may receive partial information obtained by dividing the uplink control information by each uplink control channel in the plurality of slots.

By repeatedly receiving uplink control information, for example, even a base station with poor reception quality can properly receive the uplink control information. By receiving the partial information obtained by dividing the uplink control information, for example, it is possible to appropriately receive large downlink control information with a large amount of information.

### (Complement of Embodiment)

While embodiments of the invention have been described above, the invention disclosed herein is not limited to the embodiments and it will be understood by those skilled in the art that various modifications, corrections, alternatives, substitutions, and the like can be made. While description has been made using specific numerical value examples for the purpose of promoting understanding of the invention, such numerical values are only simple examples and arbitrary appropriate values may be used unless otherwise specified. The sorting of items in the above description is not essential to the invention, details described in two or more items may be combined for use if necessary, or details described in a certain item may be applied to details described in another item (unless incompatible). Boundaries between functional units or processing units in the functional block diagrams cannot be said to be necessarily correspond to boundaries of physical components. Operations of a plurality of functional units may be physically performed by one component, or an operation of one functional unit may be physically performed by a plurality of components. The processing sequences described above may be changed in the order as long as they are not incompatible with each other. For the purpose of convenience of description, while a user apparatus 100 and a base station 200 have been described above with reference to functional block diagrams, such apparatuses may be embodied by hardware, by software, or by combination thereof. Each of software which is executed by a processor of the user apparatus 100 and software which is executed by a processor of the base station 200 in the embodiments of the invention may be stored in an appropriate storage medium such as a random access memory (RAM), a flash memory, a read only memory (ROM), an EPROM, an EEPROM, a register, a hard disk (HDD), a removable disk, a CD-ROM, a database, or a server.

Notification of information is not limited to the aspects/embodiments described in this specification, but may be performed using other methods. For example, the notification of information may be performed physical layer signaling (such as downlink control information (DCI) or uplink control information (UCI)), upper layer signaling (such as radio resource control (RRC) signal, medium access control (MAC) signaling, or broadcast information (master information block (MIB) and system information block (SIB))), other signals, or combinations thereof. The RRC signaling may be referred to as an RRC message and may be, for example, an RRC connection setup message or an RRC connection reconfiguration message.

The aspects/embodiments described in this specification may be applied to systems employing long term evolution (LTE), LTE-advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), or other appropriate systems and/or next-generation systems to which the systems are extended.

The processing sequences, the sequences, flowcharts and the like of the aspects/embodiments described above in this specification may be changed in the order as long as they are not incompatible with each other. For example, in the methods described in this specification, various steps as elements are described in an exemplary order and the methods are not limited to the described order. Specific operations which are performed by the base station 200 in this specification may be performed by an upper node thereof in some cases. In a network including one or more network nodes including a base station 200, various operations which are performed to communicate with a user apparatus 100 can be apparently performed by the base station 200 and/or network nodes (for example, an MME or an S-GW can be considered but the network nodes are not limited thereto) other than the base station 200. A case in which the number of network nodes other than the base station 200 is one has been described above, but a combination of plural different network nodes (for example, an MME and an S-GW) may be used.

The aspects/embodiments described in this specification may be used alone, may be used in combination, or may be switched with implementation thereof.

The user apparatus 100 may also be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several appropriate terms by those skilled in the art.

The base station 200 may be referred to as an NodeB (NB), an enhanced NodeB (eNB), a base station, or some other appropriate terms by those skilled in the art.

The terms "determining (determining)" and "deciding (determining)" used in this specification may include various types of operations. For example, "determining" and "deciding" may include deeming that to perform judging, calculating, computing, processing, deriving, investigating, looking up (e.g., search in a table, a database, or another data structure), or ascertaining is to perform "determining" or "deciding". Furthermore, "determining" and "deciding" may include deeming that to perform receiving (e.g., reception of information), transmitting (e.g., transmission of information), input, output, or accessing (e.g., accessing data in memory) is to perform "determining" or "deciding". Furthermore, "determining" and "deciding" may include deeming that to perform resolving, selecting, choosing, establishing, or comparing is to perform "determining" or "deciding". Namely, "determining" and "deciding" may include deeming that some operation is to perform "determining" or "deciding".

An expression "on the basis of ∼" which is used in this specification does not refer to only "on the basis of only ∼," unless apparently described. In other words, the expression "on the basis of ∼" refers to both "on the basis of only∼" and "on the basis of at least ∼."

So long as terms "include" and "including" and modifications thereof are used in this specification or the appended claims, the terms are intended to have a comprehensive meaning similar to a term "comprising." A term "or" which is used in this specification or the claims is intended not to mean an exclusive or.

In the entire disclosure, for example, when an article such as a, an, or the is added in translation into English, such an article refers to including the plural unless otherwise recognized from the context.

While the invention has been described above in detail, it is apparent to those skilled in the art that the invention is not limited to the embodiments described in the specification. The invention can be carried out as modified and changed embodiments without departing from the concept and scope of the invention which are defined by the appended claims. Accordingly, the description in this specification is made for illustrative description and does not have any restrictive meaning.

This patent application is based upon and claims the benefit of priority of Japanese Patent Application No. 2017-019138 filed on February 3, 2017, and the entire contents of Japanese Patent Application No. 2017-019138 are incorporated herein by reference.

### DESCRIPTION OF REFERENCE SIGNS

- 100: user apparatus
- 110: signal transmission unit
- 120: signal reception unit
- 130: configuration information management unit
- 200: base station
- 210: signal transmission unit
- 220: signal reception unit
- 230: scheduling unit
- 240: configuration information management unit
- 1001: processor
- 1002: memory
- 1003: storage
- 1004: communication device
- 1005: input device
- 1006: output device

## Claims

1. A user apparatus configured to perform communication with a base station in a radio communication system, comprising:
a storage unit configured to store configuration information on an aggregated uplink control channel in which a plurality of uplink control channels in a plurality of slots are aggregated; and
a transmission unit configured to transmit uplink control information, to the base station, using the aggregated uplink control channel based on the configuration information.

2. The user apparatus as claimed in claim 1, wherein the transmission unit repeatedly transmits the uplink control information using each uplink control channel in the plurality of slots, or transmits partial information obtained by dividing the uplink control information using each uplink control channel in the plurality of slots.

3. The user apparatus as claimed in claim 1 or 2, wherein the transmission unit transmits the uplink control information by applying frequency hopping among the plurality of slots.

4. The user apparatus as claimed in any one of claims 1 - 3, wherein the transmission unit transmits, to the base station, a plurality of pieces of uplink control information each including different information by using the aggregated uplink control channel.

5. A base station configured to perform communication with a user apparatus in a radio communication system, comprising:
a storage unit configured to store configuration information on an aggregated uplink control channel in which a plurality of uplink control channels in a plurality of slots are aggregated; and
a reception unit configured to receive uplink control information, from the user apparatus, using the aggregated uplink control channel based on the configuration information.

6. The base station as claimed in claim 5, wherein the reception unit repeatedly receives the uplink control information by each uplink control channel in the plurality of slots, or receives partial information obtained by dividing the uplink control information by each uplink control channel in the plurality of slots.
